# Europäisches Patentamt
## European Patent Office
### Office européen des brevets

(19)

(11) Veröffentlichungsnummer : **0 369 293 B1**

(12) **EUROPÄISCHE PATENTSCHRIFT**

(51) Int. Cl.⁵ : **F24D 3/14**

(51) Int. Cl.$^5$ : **F24D 3/14**

(21) Anmeldenummer : **89120605.4**

(22) Anmeldetag : **07.11.89**

---

(54) **Vorrichtung zur Befestigung eines Heizrohres.**

---

(30) Priorität : **14.11.88 DE 3838544**

(43) Veröffentlichungstag der Anmeldung :
**23.05.90 Patentblatt 90/21**

(45) Bekanntmachung des Hinweises auf die
Patenterteilung :
**29.04.92 Patentblatt 92/18**

(84) Benannte Vertragsstaaten :
**AT BE CH DE ES FR GB GR IT LI NL SE**

(56) Entgegenhaltungen :
**CH-A- 658 849**
**DE-A- 3 125 265**
**GB-A- 2 196 317**

(73) Patentinhaber : **SPEISER WÄRME TECHNIK**
**Alexander F.W. Speiser Magnusstrasse 1**
**W-7953 Bad Schussenried (DE)**

(72) Erfinder : **Speiser, Alexander F.W.**
**Magnusstrasse 1**
**W-7953 Bad Schussenried (DE)**

(74) Vertreter : **Engelhardt, Guido, Dipl.-Ing.**
**Patentanwalt Montafonstrasse 35 Postfach**
**1350**
**W-7990 Friedrichshafen 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf eine Vorrichtung zur Befestigung eines Heizrohres oder dgl. auf einem Untergrund, beispielsweise auf einem Fußboden.

Das Verlegen von Heizrohren für Fußbodenheizungen erfordert einen großen Arbeits- und Zeitaufwand, da die Heizrohre nicht nur, um eine angenehme Beheizung eines Raumes zu gewährleisten, in einer vorgegebenen Anordnung verlaufen sollten, sondern bis zur Aufbringung des Estrichs, in den das Heizrohr eingebettet wird, in der eingenommenen Lage auch verbleiben sollen. Mittels U-förmiger Clipse, die auf das zu verlegende Heizrohr sowie auf ausgelegte Stahlgittermatten aufgesteckt werden, oder mit Hilfe von Heftklammern, die über das Heizrohr hinweg im Boden verankert werden, ist dies zwar zu bewerkstelligen, für diese Verlegearbeiten sind aber jeweils zwei Arbeitskräfte erforderlich. Auch ist der Materialaufwand, insbesondere bei der Verwendung von Clipsen zur Halterung eines Heizrohres, erheblich.

In der CH-A-658849 ist eine Applikationsvorrichtung für Klebstoffband beschrieben, während die DE-A-3125265 eine Vorrichtung nur zum Auslegen eines Flußboden-Heizungstohres zeigt.

Aufgabe der Erfindung ist es daher, eine Vorrichtung zur Befestigung eines Heizrohres oder dgl. zu schaffen, die die nicht nur sehr einfach in der konstruktiven Ausgestaltung und damit wirtschaftlich herzustellen ist, sondern die es ermöglicht, abweichend von des bisherigen Befestigungsarten ein Heizrohr ohne Schwierigkeiten auf einem Untergrund aufzukleben. Die Handhabung soll hierbei äußerst einfach und problemlos sein, auch soll das Ankleben von nur einer Arbeitskraft vorgenommen werden können,daß so ß eine kostengünstigee Verlegung von Heizrohren zu erzielen ist.

Gemäß der Erfindung wird dies dadurch erreicht, daß an einem verfahrbaren Tragrahmen eine horizontal angeordnete erste Trägerwelle zur drehbaren Lagerung eines doppelseitig klebenden auf einem Trennband aufgewickelten Bandes, eine trieblich über eine Rutschkupplung mit der ersten Trägerwelle verbundene und parallel zu dieser verlaufende zweite Trägerwelle zur Aufnahme des von dem Klebeband abgezogenen Trennbandes, eine sich auf dem anzuklebenden Heizrohr oder eines anderen zu verlegenden Teils abwälzende Anpreßrolle sowie ein Führungsglied zur Führung des Heizrohres zu dem von der ersten Trägerwelle abgenommenen Klebebandes und der Anpreßrolle gehalten sind.

Vorteilhaft ist es hierbei, die erste Trägerwelle über einen Riementrieb oder dgl. mit der zweiten Trägerwelle trieblich zu verbinden, auf der zweiten Trägerwelle eine Haspel zum Aufwickeln des Trennbandes anzuordnen und die Rutschkupplung zwischen dieser und der zweiten Trägerwelle einzusetzen, wobei die Rutschkupplung durch eine oder zwei an den Stirnseiten der Haspel an diese und/oder den Riementrieb mittels einer Feder Anpreßbare Reibscheiben, vorzugsweise aus Kunststoff, gebildet sein kann.

Zweckmäßig ist es des weiteren, wenn die Anpreßrolle auf der Außenmantelfläche eine dem Heizrohr angepaßtee Profilierung aufweist und vorzugsweise über einen mit einer Rutschkupplung versehenen Riementrieb mit der ersten Trägerwelle trieblich verbunden ist.

Angebracht ist es auch, auf der ersten Trägerwelle und der zweiten Trägerwelle jeweils zwei Scheiben mit seitlichem Abstand zueinander als Haspel zur Aufnahme des Klebebandes bzw. des Trennbandes anzuordnen, von denen jeweils eine Scheibe abnehmbar zu halten ist.

Das dem Heizrohr zugeordnete Führungsglied kann in einfacher Ausgestaltung durch eine verstellbar an einer vorzugsweise durch die Kraft einer Feder zustellbaren Strebe des Tragrahmens angebrachten, z. B. mittels eines Bolzens verschwenkbar gelagerte Führungshülse, gebildet werden.

Ferner sollte der Tragrahmen mit einem vorzugsweise abnehmbaren Griffstück und mit vorzugsweise einstellbaren Haltern zur Aufnahme des Heizungsrohres versehen sein.

Wird eine Vorrichtung zur Befestigung eines Heizrohres oder dgl. gemäß der Erfindung ausgebildet, so ist es möglich, ein Heizrohr in kurzer Zeit durch eine Arbeitskraft zu verlegen, ohne daß dazu besondere Vorkehrungen zu treffen sind. Durch Verfahren der Vorrichtung wird nämlich das zu verlegende Heizrohr von einer mitgeführten oder bereitgestellten Vorratsrolle abgespult, selbsttätig mit einem Klebeband versgehen und gen den Untergrund gepreßt, so daß eine sichere Befestigung bis zur Aufbringung des Estrichs gegeben ist. Da gleichzeitig auch das Trennband aufgewickelt wird, kann durch dieses der Arbeitsablauf nicht gestört werden, auch ist dieses nach dem Verlegen eines Heizrohres nicht gesondert aufzusammeln. Und da zum Verlegen nur eine Arbeitskraft, die die vorschlagsgemäß ausgebildete Vorrichtung verfährt, erforderlich ist, ist auch der Kostenaufwand erheblich geringer als bei den bisherigen Verlegearten. Dennoch ist bei einfacher Handhabung der wirtschaftlich herzustellenden Vorrichtung eine sachgerechte Verlegung von Heizrohren gewährleistet.

In der Zeichnung ist ein Ausführungsbeispiel der gemäß der Erfindung ausgebildeten Vorrichtung zur Befestigung eines Heizrohres dargestellt, das nachfolgend im einzelnen erläutert ist. Hierbei zeigt:

Figur 1 die Vorrichtung in Seitenansicht,

Figur 2 die Vorrichtung nach Figur 1 in einer Vorderansicht,

Figur 3 eine andersartige Ausgestaltung der Vorrichtung nach Figur 1 in Seitenansicht und

Figur 4 die Vorrichtung nach Figur 3 wiederum in einer Vorderansicht.

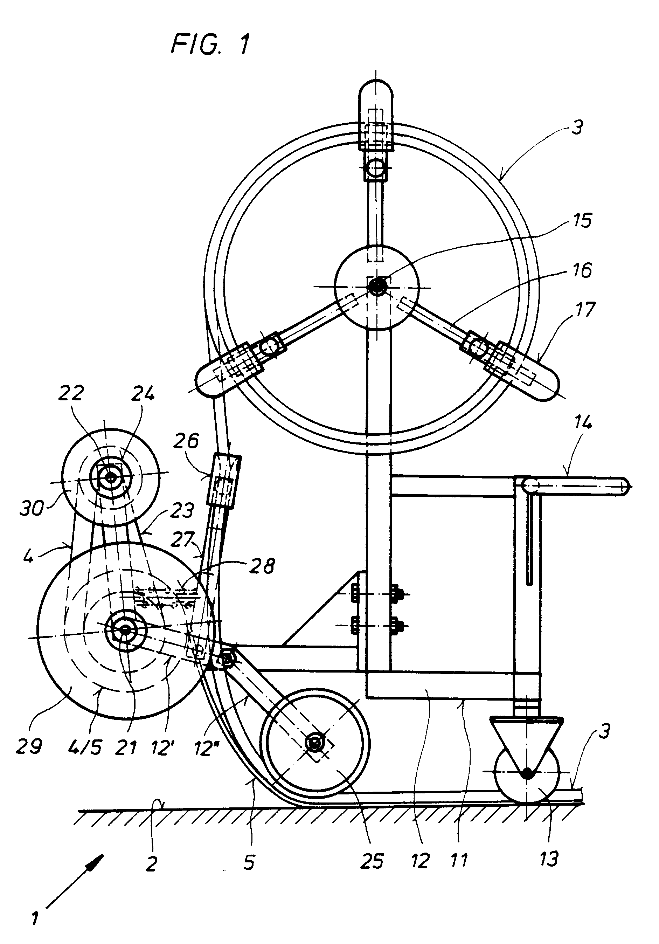

Die in den Figuren 1 und 2 sowie 3 und 4 dargestellte und mit 1 bzw. 1′ bezeichneten Vorrichtungen dienen jeweils zur Verlegung eines Heizrohres 3 auf einem Untergrund 2, und zwar kann mit Hilfe der Vorrichtungen 1 bzw. 1′ das Heizrohr 3 auf dem Untergrund 2 aufgeklebt werden. Dazu ist ein doppelseitig klebendes Klebeband 5 vorgesehen, das auf einem Trennband 4 aufgewickelt ist.

Die Vorrichtung 1 besteht im wesentlichen aus einem aus Streben 12, 12′ und 12″ zusammengeschweißten Tragrahmen 11, der mittels zweier Laufräder 13 verfahrbar und mit einem Griffstück 14 versehen ist, sowie einer ersten Trägerwelle 21 für das aufgewickelte Klebeband 5 und einer zweiten Trägerwelle 22, auf der das Trennband 4 nach Abziehen des Klebebandes 5 aufgewickelt wird. Über einen Riementrieb 23 sowie eine Rutschkupplung 24 sind die beiden Trägerwellen 21 und 22 trieblich verbunden. Außerdem ist an dem Tragrahmen 11 ein Führungsglied 26, für das von einer Vorratsrolle abgenommene Heizrohr 3 sowie eine Anpreßrolle 25, die an der Strebe 12″ gehalten ist, zum Anpressen des Heizrohres 3 auf den Untergrund 2 angebracht. Die durch das Abwickeln des Klebebandes 5 von der ersten Trägerwelle 21 sowie durch das Aufwickeln des Trennbandes 4 auf der zweiten Trägerwelle 22 bedingten unterschiedlichen Umfangsgeschwindigkeiten werden durch die Rutschkupplung 24 ausgeglichen.

Das Führungsglied 26 ist an einem verschwenkbar gelagerten Halter 27 angelenkt, der durch eine Zugfeder 28 in Richtung des Klebebandes 5 gezogen wird. Des weiteren sind die erste Trägerwelle 21 sowie die zweite Trägerwelle 22 jeweils als Haspel 29 bzw. 30 ausgebildet, so daß das auf dem Trennband 4 aufgewickelte Klebeband 5 sowie das Trennband 4 beim Abwickeln bzw. Aufwickeln sicher geführt sind.

Das zu verlegende Heizrohr 3 ist auf einer durch Arme 16 und Aufnahmeteile 17 gebildeten Aufnahmerolle, die drehbar um eine Welle 15 des Tragrahmens 11 angeordnet ist, aufgewickelt und wird beim Verlegen kontinuierlich mittels des Führungsgliedes 26 dem Klebeband 5 zugeführt, das sich mit einer Seite an dem Heizrohr 3 anlegt und an diesem haftet. Durch die Anpreßrolle 25 wird sodann das Heizrohr 3 mit der mit dem Klebeband 5 versehenen Seite gegen den Untergrund 2 gepreßt, an dem aufgrund der doppelseitigen Beschichtung des Klebebandes 5 das Heizrohr 3 somit angeklebt wird. Das von dem Klebeband 5 abgelöste Trennband 4 wird dagegen gleichzeitig auf der zweiten Trägerwelle 22 aufgewickelt, die über den Riementrieb 22 mit der durch die Vorschubbewegung des Tragrahmens 11 durch Abziehen des Klebebandes 5 angetriebenen ersten Trägerwelle 21 in Triebverbindung steht. Mit Hilfe der Rutschkupplung 24 werden dabei die Umfangsgeschwindigkeiten der ersten Trägerwelle 21 und der zweiten Trägerwelle 22 aneinander angepaßt.

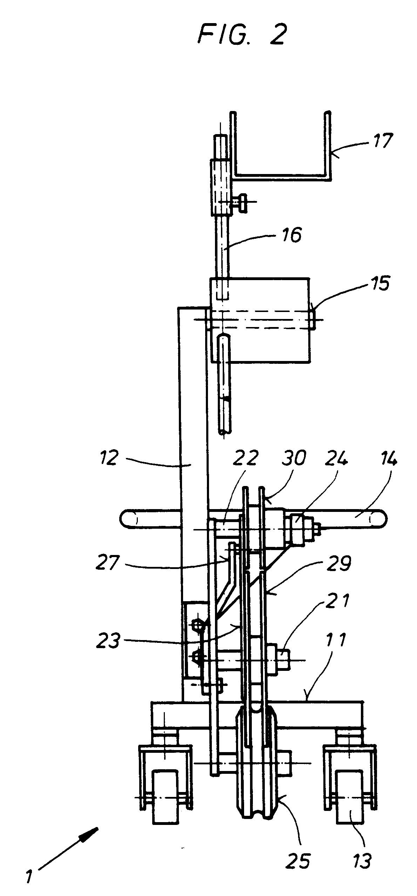

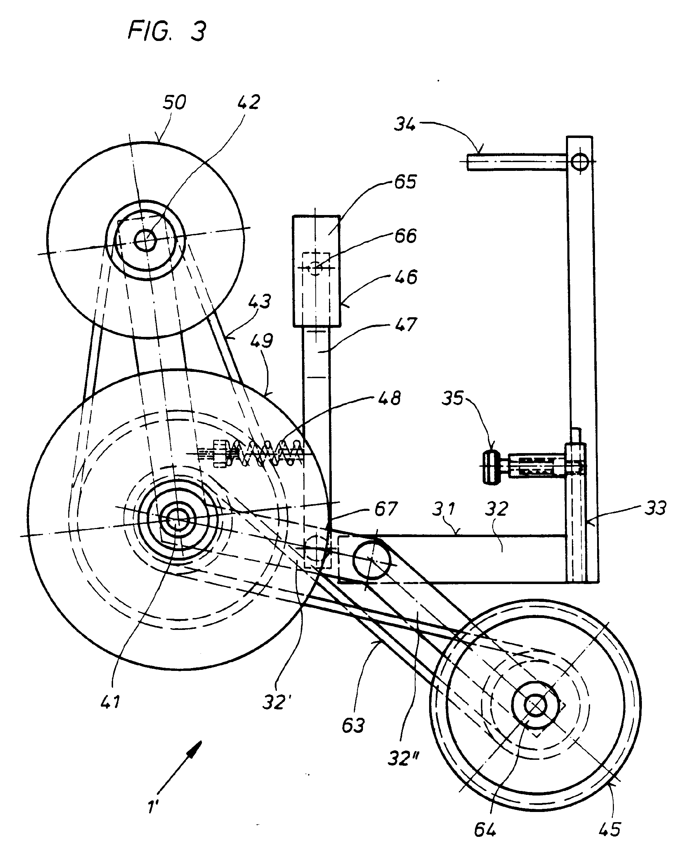

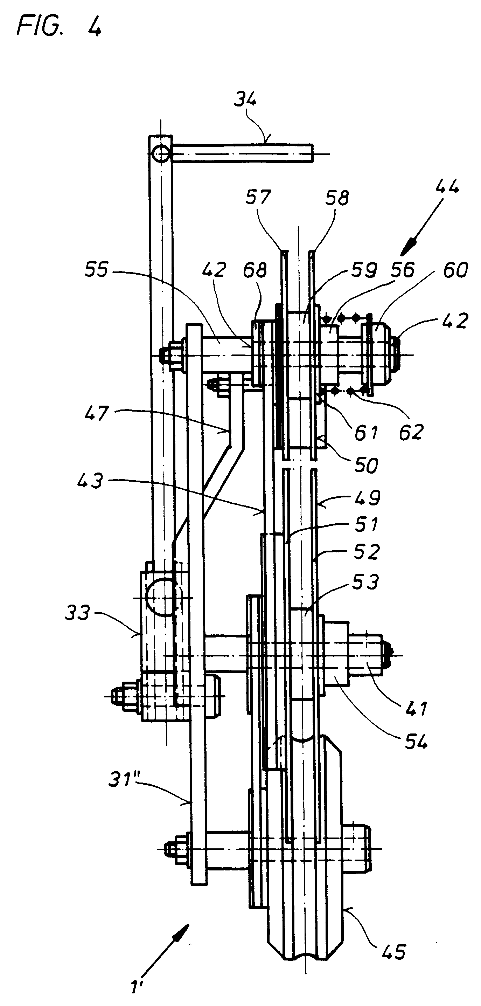

Die in den Figuren 3 und 4 dargestellte Vorrichtung 1′ ist in etwa gleicher Weise ausgebildet wie die Vorrichtung 1 nach den Figuren 1 und 2 und stellt eine vereinfachte Ausgestaltung dar. An dem aus Streben 32, 32′ und 32″ zusammengesetzten Tragrahmen 31 ist in einer Führung 33 ein Griffstück 34 eingesetzt, das mittels einer Spannschraube 35 arretiert ist. Die Vorrichtung 1′ kann somit auch an einem nicht gezeigten Fahrgestell angebracht oder unmittelbar mit Hilfe des Griffstückes 34 verfahren werden.

Der Tragrahmen 31 ist des weiteren mit einer ersten Trägerwelle 41 für das aufgewickelte Klebeband 5 sowie einer zweiten Trägerwelle 42 für das aufzuwickelnde Trennband 4 und einer Anpreßrolle 45 zum Anpressen des zu verlegenden Heizrohres auf dem Untergrund versehen. Die beiden Trägerwellen 41 und 42 sind wiederum über einen Riementrieb 43 sowie eine Rutschkupplung 44 trieblich miteinander verbunden.

Zur Führung des Heizrohres 3 zu dem von der ersten Trägerwelle 41 abgenommenen Klebebandes 5 ist ein Führungsglied 46 in Form einer Hülse 65 vorgesehen, die mittels eines Bolzens 66 an einem Halter 47 verschwenkbar gehalten ist. Der Halter 47 ist ebenfalls mittels eines Bolzens 67 an der Strebe 32′ angelenkt und wird durch eine Zugfeder 48 in Richtung des Klebebandes gezogen.

Die beiden Trägerwellen 41 und 42 sind, um das aufgewickelte Klebeband 5 sowie das Trennband 4 gut aufnehmen zu können, jeweils als Haspel 49 und 50 ausgebildet und bestehen, wie dies insbesondere der Figur 4 zu entnehmen ist, aus mit Abstand zueinander angeordneten Scheiben 51 und 52 bzw. 57 und 58, zwischen denen Distanzstücke 53 bzw. 59 angeordnet sind. Außerdem sind die Scheiben 52 und 58 auswechselbar, so daß leicht eine Rolle aufgewickeltes Klebeband auf die Trägerwelle 41 aufgesteckt und das aufgewickelte Trennband von der Trägerwelle 42 abgenommen werden können. Dazu sind Muttern 54 bzw. 60 abzuschrauben, durch die die Scheiben 51, 52 bzw. 57, 58 verspannt sind.

Die Rutschkupplung 44, über die die zweite Trägerwelle 42 kraftschlüssig mit dem Riementrieb 43 verbunden ist, besteht aus zwei seitlich neben den Scheiben 57 und 58 angeordneten Kunststoffscheiben 61, einem Gegenlager 68 sowie einer Druckfeder 62, die mittels einer Hülse 56 gemeinsam auf einem in dem Tragrahmen 31 gehaltenen Bolzen 55 angeordnet sind. Die Hülse 56 trägt auch eine Riemenscheibe des Riementriebes 43 und wird durch diesen angetrieben, die Haspel 50 ist dagegen frei drehbar auf der Hülse 56 gelagert. Durch die Kraft der Druckfeder 62 wird jedoch die Haspel 50 gegen die rotierende Scheibe des Riementriebes 43 gepreßt, so daß die Haspel 50 mitgenommen wird. Sobald allerdings durch das aufzuwickelnde Trennband eine entsprechende Zugkraft aufgebracht wird, rutscht die auf ein bestimmtes Drehmoment ausgelegte Rutschkupplung 44 durch. Durch ein Durchrutschen der Rutschkupplung 44 wird somit deren Umfangsgeschwindigkeit reduziert und die Umfangsgeschwindigkeiten der beiden Trägerwellen 41, 42 aneinander angeglichen. Ein Abreißen des Trennbandes wird dadurch vermieden.

Bei der Vorrichtung nach den Figuren 3 und 4 ist auch die erste Trägerwelle 41 angetrieben, und zwar ist diese mit der sichAnpreßrolle auf dem Untergrund abwälzenden Anpreßrolle 45 trieblich verbunden. Dazu dient ebenfalls ein gekreuzt verlaufender Riementrieb 63 sowie eine Rutschkupplung 64.


**Patentansprüche**

1. Vorrichtung zur Befestigung eines Heizrohres oder dgl. auf einem Untergrund, beispielsweise einem Fußboden,
    **dadurch gekennzeichnet,**
daß an einem verfahrbaren Tragrahmen (11; 31) eine horizontal angeordnete erste Trägerwelle (21; 41) zur drehbaren Lagerung eines doppelseitig klebenden auf einem Trennband (4) aufgewickelten Bandes (5), eine trieblich über eine Rutschkupplung (24; 44) mit der ersten Trägerwelle (21; 41) verbundene und parallel zu dieser verlaufende zweite Trägerwelle (22; 42) zur Aufnahme des von dem Klebeband (5) abgezogenen Trennbandes (4), eine sich auf dem anzuklebenden Heizrohr (3) oder eines anderen zu verlegenden Teils abwälzende Anpreßrolle (25; 45) sowie ein Führungsglied (26; 46) zur Führung des Heizrohres (3) zu dem von der ersten Trägerwelle (21; 41) abgenommenen Klebebandes (5) und der Anpreßrolle (25; 45) gehalten sind.

2. Vorrichtung nach Anspruch 1,
    **dadurch gekennzeichnet,**
daß die erste Trägerwelle (21; 41) über einen Riementrieb (23; 43) oder dgl. mit der zweiten Trägerwelle (22; 42) trieblich verbunden ist.

3. Vorrichtung nach Anspruch 2,
    **dadurch gekennzeichnet,**
daß auf der zweiten Trägerwelle (22; 42) eine Haspel (30; 50) zum Aufwickeln des Trennbandes (4) angeordnet und daß die Rutschkupplung (24; 44) zwischen dieser und der zweiten Trägerwelle (22; 42) eingesetzt ist.

4. Vorrichtung nach Anspruch 3,
    **dadurch gekennzeichnet,**
daß die Rutschkupplung (64) durch eine oder zwei an den Stirnseiten der Haspel (50) an diese (Scheibe 58) und/oder den Riementrieb (43) mittels einer Feder (62) anpreßbare Reibscheiben (61), vorzugsweise aus Kunststoff, gebildet ist.

5. Vorrichtung nach einem oder mehreren der Ansprüche 1 bis 4,
    **dadurch gekennzeichnet,**
daß die Anpreßrolle (25; 45) auf der Außenmantelfläche eine dem Heizrohr (3) angepaßte Profilierung aufweist.

6. Vorrichtung nach einem oder mehreren der Ansprüche 1 bis 5,
    **dadurch gekennzeichnet,**
daß die Anpreßrolle (45) vorzugsweise über einen mit einer Rutschkupplung (64) versehenen Riementrieb (63) mit der ersten Trägerwelle (41) trieblich verbunden ist.

7. Vorrichtung nach einem oder mehreren der Ansprüche 1 bis 6,
    **dadurch gekennzeichnet,**
daß auf der ersten Trägerwelle (41) und auf der zweiten Trägerwelle (42) jeweils zwei Scheiben (51, 52 bzw. 57, 58) mit seitlichem Abstand zueinander als Haspel (29, 30; 59, 60) zur Aufnahme des Klebebandes (5) bzw. des Trennbandes (4) angeordnet sind, von denen jeweils eine Scheibe (52, 58) abnehmbar gehalten ist.

8. Vorrichtung nach einem oder mehreren der Ansprüche 1 bis 7,
    **dadurch gekennzeichnet,**
daß das dem Heizrohr (3) zugeordnete Führungsglied (26; 46) durch eine verstellbar an einer vorzugsweise durch die Kraft einer Feder (28; 48) zustellbaren Strebe (27; 47) des Tragrahmens (11; 31) angebrachte, z. B. mittels eines Bolzens (66) verschwenkbar gelagerte Führungshülse (65) gebildet ist.

9. Vorrichtung nach einem oder mehreren der Ansprüche 1 bis 8,
    **dadurch gekennzeichnet,**
daß der Tragrahmen (11; 31) mit einem vorzugsweise abnehmbaren Griffstück (14; 34) versehen ist.

10. Vorrichtung nach einem oder mehreren der Ansprüche 1 bis 9,
    **dadurch gekennzeichnet,**
daß der Tragrahmen (11) mit vorzugsweise einstellbaren Haltern (17) zur Aufnahme des Heizungsrohres (3) versehen ist.

**Claims**

1. Apparatus for mounting a heating tube or similar item on a base, for example a floor,
**characterized in that**
a first carrier shaft (21; 41) is arranged horizontally on a mobile support frame (11; 31) as a rotatable mounting for a twin-sided adhesive tape (5) rolled onto a masking tape (4), said support frame (11; 31) also housing a second carrier shaft (22; 42) connected to, and parallel to, the first carrier shaft (21; 41), which it drives via a slip coupling (24; 44), said second carrier shaft receiving the masking tape (4) as it is pulled off the adhesive tape (5), furthermore housing a pressure roller (25; 45) which runs over the heating tube (3) upon which adhesive tape is being applied, or upon some other similar component, and lastly housing a guide member (26; 46) for guiding the heating tube (3) to the adhesive tape (5) as it unrolls from the first carrier shaft (21; 41), and for guiding the pressure roller (25; 45).

2. Apparatus as claimed in claim 1,
**characterized in that**
the first carrier shaft (21; 41) is positively connected to the second carrier shaft (22; 432) by means of a belt drive (23; 43).

3. Apparatus as claimed in claim 2,
**characterized in that**
a reeling device (30; 50) is arranged on the second carrier shaft (22; 42) to roll upthe he masking tape (4) and in that the slip coupling (24; 44) is mounted between this reeling device (30; 50) and the second carrier shaft (22; 42).

4. Apparatus as claimed in claim 3,
**characterized in that**
the slip coupling (64) is arranged as one or two friction discs (61) on the face ends of the reeling device (50) which are pressed onto this device (disc 58) and/or onto the belt drive (43) by means of a spring (62), preferably made of plastic.

5. Apparatus as claimed in one or more of claims 1 to 4,
**characterized in that**
the pressure roller (25; 45) has a profiled surface on its outer coating designed to fit around the heating tube (3).

6. Apparatus as claimed in one or more of claims 1 to 5,
**characterized in that**
the pressure roller (45) is preferably connected positively to the first carrier shaft (41) by means of a belt drive (63) to which a slip coupling (64) is attached.

7. Apparatus as claimed in one or more of claims 1 to 6,
**characterized in that**
two discs (51, 52 and 57, 58 respectively) are arranged on the first carrier shaft (41) and the second carrier shaft (42), said pairs of discs being laterally offset to one another, further being arranged as reeling devices (29, 30; 59, 60) for receiving the adhesive tape (5) and masking tape (4) respectively, and whereby one disc (52, 58) in each pair can be removed.

8. Apparatus as claimed in one or more of claims 1 to 7,
**characterized in that**
the guide member (26; 46) arranged on the heating tube (3) is arranged as an adjustable web (27; 47) mounted on the support frame (11; 31) upon which it is preferably adjusted by the force of a sprring (28; 48); e.g. arranged as a guide sleeve (65) in a mounting which can pivot on a shaft (66).

9. Apparatus as claimed in one or more of claims 1 to 8,
**characterized in that**
the support frame (11; 31) is provided with a grip feature (14; 34) which is preferably removable.

10. Apparatus as claimed in one or more of claims 1 to 9,
**characterized in that**
the support frame (11) is provided with holders (17) to support the heating tube (3), said holders preferably being adjustable.

## Revendications

1. Dispositif pour la fixation d'un tuyau de chauffage ou d'un élément semblable sur un sol, p. ex. un planher, se caractérisant par le fait que

sur un cadre-support mobile (11; 31), il est fixé un premier arbre de support horizontal (21; 41) pour le logement orientable d'une bande (5) adhésive sur les deux côtés et enroulée sur une bande de séparation (4), un deuxième arbre de support (22; 42) lié par un accouplement à friction (24; 44) au premier arbre de support (21; 41) et disposé parallèle à celui-ci pour recevoir la bande de séparation (4) retirée de la bande adhésive (5), un rouleau de pression (25; 45) roulant sur le tuyau de chauffage à coller (3) ou sur un autre élément à coller ainsi qu'un membre de guidage (26; 46) pour le guidage du tuyau de chauffage (3) sur la bande de serrage (5) retirée du premier arbre de support (21; 41) et sur le rouleau de pression (25; 45).

2. Dispositif d'après la revendication 1, se caractérisant par le fait que

le premier arbre de support (21; 41) est lié par une courroie d'entraînement (23; 43) ou d'une manière semblable au deuxième arbre de support (22; 42).

3. Dispositif d'après la revendication 2, se caractérisant par le fait que

sur le deuxième arbre de support (22; 42), il est disposé un dévidoir (30; 50) pour enrouler la bande de séparation (4) et que l'accouplement à friction (24; 44) est monté entre le dévidoir et le deuxième arbre de support (22; 42).

4. Dispositif d'après la revendication 3, se caractérisant par le fait que

l'accouplement à friction (64) est formé par un ou deux disques de friction (61) de préférence en matière synthétique disposés sur les faces frontales du dévidoir (50), qui se laissent presser au moyen d'un ressort sur celui-ci (disque 58) et/ou la courroie d'entraînement (43).

5. Dispositif d'après une ou plusieurs des revendications 1 à 4, se caractérisant par le fait que

l'extérieur du manteau du rouleau de pression (25; 45) porte un profil correspondant au tuyau de chauffage (3).

6. Dispositif d'après une ou plusieurs des revendications 1 à 5, se caractérisant par le fait que

le rouleau de pression (45) est lié au premier arbre de support (41) au moyen d'une courroie d'entraînement (63) munie d'un accouplement à friction (64).

7. Dispositif d'après une ou plusieurs des revendications 1 à 6, se caractérisant par le fait que

deux disques (51, 52 ou 57, 58) sont disposés avec un certain écart entre eux sur le premier arbre de support (41) et sur le deuxième arbre de support (42) afin de former un dévidoir (29, 30; 59, 60) qui reçoit la bande adhésive (5) ou la bande de serrage (4) et dont un disque (52, 58) peut être démonté.

8. Dispositif d'après une ou plusieurs des revendications 1 à 7, se caractérisant par le fait que

le membre de guidage (26; 46) attribué au tuyau de chauffage (3) est formé par une douille de guidage (65) orientable au moyen d'un boulon (66) et déplaçable sur une traverse (27; 47) du cadre-support (11; 31) qui se laisse avancer de préférence par la force d'un ressort (28; 48).

9. Dispositif d'après une ou plusieurs des revendications 1 à 8, se caractérisant par le fait que

le cadre-support (11; 31) est équipé de préférence d'une poignée (14; 34) démontable.

10. Dispositif d'après une ou plusieurs des revendications 1 à 9, se caractérisant par le fait que

le cadre support (11) est équipé de préférence de supports réglables (17) pour le logement du tuyau de chauffage (3).

FIG. 1

FIG. 2

FIG. 3

FIG. 4